# EUROPEAN PATENT SPECIFICATION

(11) **EP 0 459 555 B1**
(45) Date of publication and mention of the grant of the patent: **21.09.1994**
(21) Application number: 91201115.2
(22) Date of filing: 08.05.1991
(51) Int. Cl.: G01G 19/03, G01G 15/00

(54) **Loading device for dynamic weighing machines**
Ladeeinrichtung für dynamische Wiegemaschinen
Dispositif de charge pour machines de pesage dynamique

(30) Priority: 28.05.1990 IT 4684390; 30.07.1990 IT 4686690
(43) Date of publication of application: 04.12.1991
(73) Proprietor: COSTRUZIONI TECNICHE S.R.L. - COSTEC, I-46048 ROVERBELLA (IT)
(72) Inventor: Mori Checcucci, Tommaso, I-43100 Parma (IT)
(74) Representative: Piovesana, Paolo

(56) References cited:
- DE-A- 2 949 691
- DE-A- 3 027 859

## Description

This invention relates in a general manner to machines for weighing or checking the weight of objects or products in uniform continuous movement.

More particularly, the invention relates to a device for feeding said objects or products in uniform continuous movement to machines of this type, commonly known as check-weighing or dynamic weighing machines.

In said dynamic weighing machines the objects pass along the weighing plate while resting on an endless belt which either grazes the plate with only that branch under tension, or lies directly and totally on the plate.

In either case the object is weighed while it passes along the weighing plate in three stages, each of a certain duration, namely an entry stage, a weighing stage and an exit stage. The minimum distance between two consecutive objects must be such as to ensure that one object has completely left the weighing plate before the next enters.

The problem, still unsolved, which arises with such known machines is to increase their weighing rate in order to adapt them to modern production and packaging cycles, which are continuously increasing in speed.

As a mere indication, with known dynamic weighing machines a maximum of about 400 weighings per minute can be attained, whereas it would be desirable to attain at least double this rate, obviously with the same degree of accuracy.

However this problem is difficult to resolve because of the following considerations.

The most logical and immediate step which might be considered for increasing the productivity of any type of device would be to increase its speed. This however is not possible in this particular field because of limits in the response times of weighing systems (or balances).

In other words there is a speed limit or threshold which cannot be exceeded and is obviously strictly related to the time required for the object to pass over the weighing plate, known as the transit time. The transit time must obviously be sufficiently long to enable the balance to reach an equilibrium state before reading the weight value. In other words the weight can only be read when the disturbances caused by the object entering the plate cease.

More specifically, for a given balance the weighing precision depends on the weight of the object, its speed, and its length in its direction of movement.

In known dynamic weighing machines comprising a loading belt or the like, the times required for the object to enter and leave the weighing plate, ie the times required for the object to rest completely on the plate and to completely leave it are greater the longer the object.

Two successive objects must be separated by a distance at least equal to the length of the weighing plate. In its turn, the weighing plate must have a length at least one and a half times the length of the object, in order to give the balance time to settle and then correctly read the weight.

It can therefore be concluded that the minimum distance between two consecutive objects must be at least two and a half times the length of the object. This minimum distance between two consecutive objects is known as the minimum pitch.

Again, if the variation or diagram of the weight signal measured by the balance during transit of the object is considered, the following is observed:
- an initial ascending inclined portion due to the gradual resting of the arriving object;
- followed by a disturbed but averagely horizontal portion representing the object just as it is completely resting on the plate, its initial oscillation amplitude obviously depending on the object weight;
- followed by a virtually straight horizontal portion representing the weight of the object in that the balance has now reached equilibrium following said disturbed stage; and
- a descending terminal inclined portion due to the gradual abandoning of the plate by the object.

Basically, said diagram is of isosceles trapezium shape seeing that the object transits at constant speed.

At this point it is apparent that the weighing plate must necessarily have a length (in the direction of movement) at least one and a half times the length of the object to be weighed, and that the object speed must necessarily be such as to define a transit time which enables both the disturbed phase and the weight measurement to take place, these factors being the main elements which up to the present time have prevented any increase in the operating rate of dynamic weighing machines.

The main object of the present invention is to provide a loading device able to considerably increase the operating rate of said dynamic weighing machines or balances without decreasing their precision.

A further object of the invention is to provide a loading device which has as little influence as possible on the weighing because of its intrinsic characteristics.

Said objects are attained by a loading device in which the object rests on an intermediate support which itself slides along the weighing plate, contact between the intermediate support and the weighing plate being of minimal extent and as close as possible to point contact or linear contact in the direction transverse to the direction of movement.

The intermediate support according to the invention therefore comprises at least one means for its contact with the weighing plate, which can be a wheel.

In one possible embodiment, three contact means can be provided in a configuration equal to that of the underlying weighing plate, in such a manner that these rise and descend simultaneously from the weighing plate.

The invention comprises means for stabilizing and moving the intermediate support, depending on the embodiment concerned.

If the intermediate support has only one means of contact with the weighing plate it is associated, by means which allow it a degree of freedom in the vertical direction, with a support and dragging member.

If the intermediate support comprises at least three means of contact with the underlying weighing plate, it possesses inherent stability and therefore does not need to be fixed to a support member, and can advance by inertia.

Although providing some constructive complication, this also eliminates weight disturbance factors arising from the connection between the intermediate support and the support and dragging member.

The objects of the invention are attained by a loading device with the aforesaid characteristics.

The presence of said wheel or other equivalent slide and support means enables the object to be loaded onto and unloaded from the weighing plate virtually instantaneously, so that the variation or diagram of the weight signal measured by a balance equipped with the invention assumes, in contrast to that of the initially described known art, a substantially rectangular shape, the base of which represents the transit time.

Basically it is sufficient for the length of the weighing plate to be such that the transit time (after a period of initial disturbance) presents a terminal period of length sufficient to measure the stabilized value of the weight signal. Thus, apart from the necessary mutual spacing of a plurality of aligned objects fed to weighing, the weighing plate can even have a length less than that of the objects, provided this ensures a sufficient transit time.

The minimum pitch between two consecutive objects can therefore be the length of the object itself, rather than two and a half times the length.

If it is now assumed that two weighings are made in accordance with the known art and with the invention respectively, from the preceding considerations it is simple to understand that, for equal weight, length and speed of the object to be weighed, in the first case the duration of the weighing cycle is much longer than in the second case.

In conclusion, from tests carried out with a prototype constructed in accordance with the teachings of the invention and associated with a dynamic weighing machine, it has been found that this latter is able to effect more than one thousand weighings per minute.

Furthermore the same tests have shown that the weighings made according to the invention are of greater precision, particularly when compared with dynamic weighing systems in which the conveyor belt is supported by the balance, and its drive often results in damaging vibration which obviously disturbs the weighing to an extent which is greater the lighter the objects to be weighed.

A further source of disturbance is the belt joint, and the formation of electrostatic charges which exert an appreciable force between the belt and weighing plate.

The intermediate support for supporting the object and transmitting its weight to the underlying balance via a wheel or shoe can be of more complex configuration if it is required to create a constant known thrust from the bottom upwards to lighten the balance and enable its capacity to be reduced.

According to a further embodiment of the invention, adjacent intermediate supports slide on adjacent parallel guides, each provided with its own weighing plate and relative balance.

This, independently of the length of the weighing plate, enables a line of objects lying one against the other to be weighed dynamically independently of their dimensions.

Other conditions being equal, this also enables the length of the weighing plates and hence the line speed to be increased at will.

The characteristics and constructional merits of the invention, together with its use, will be apparent from the detailed description given hereinafter with reference to the accompanying figures which illustrate two preferred embodiments by way of non-limiting example.

Figure 1 is an elevational view of a first embodiment of the invention.

Figure 2 is a view of the preceding figure from above.

Figure 3 is a schematic view showing the invention associated with a dynamic weighing balance.

Figure 4 is a section on the line IV-IV of Figure 3.

Figure 5 is a schematic representation of the invention in the embodiment incorporating a counteracting spring.

Figure 6 is a schematic representation of a weighing line comprising two adjacent slide guides.

Figure 7 is a schematic plan view of Figure 6.

Figure 8 is a partial schematic side elevation of a conveying line equipped with a further embodiment of the invention.

Figure 9 is a view of Figure 8 from above.

Figures 10 and 11 are sections on the lines X-X and XI-XI of Figure 9 respectively.

Figure 12 is a schematic view similar to that of Figure 8, showing a further embodiment of the invention.

Figure 13 is a longitudinal section through Figure 12.

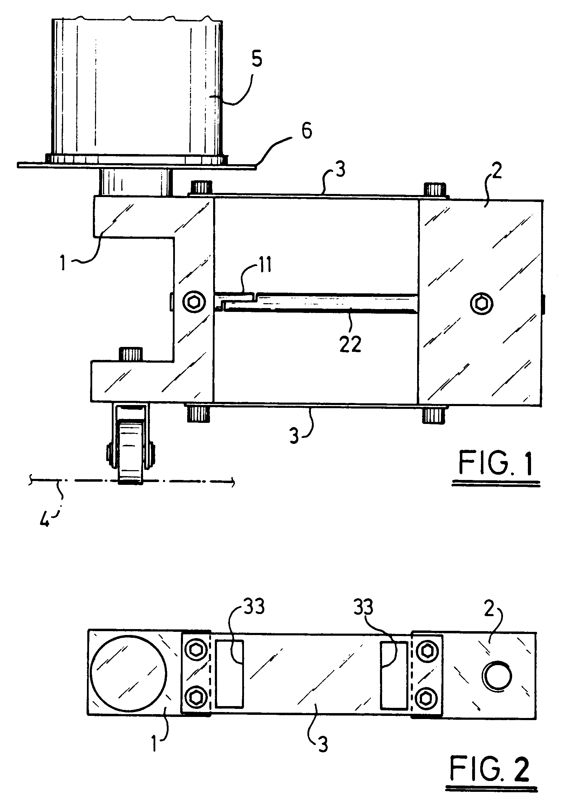

Said figures, and in particular Figures 1 and 2, show two mutually opposing bodies 1 and 2 connected together by two thin plate elements 3 or strips, constructed of an elastically flexible material such as harmonic steel. The body 1 is known hereinafter as the intermediate support.

The two strips 3 each comprise a pair of apertures 33 (Figure 2) defining two regions of greater flexibility acting as hinges.

In this manner the two bodies 1 and 2 form the two sides of an articulated parallelogram.

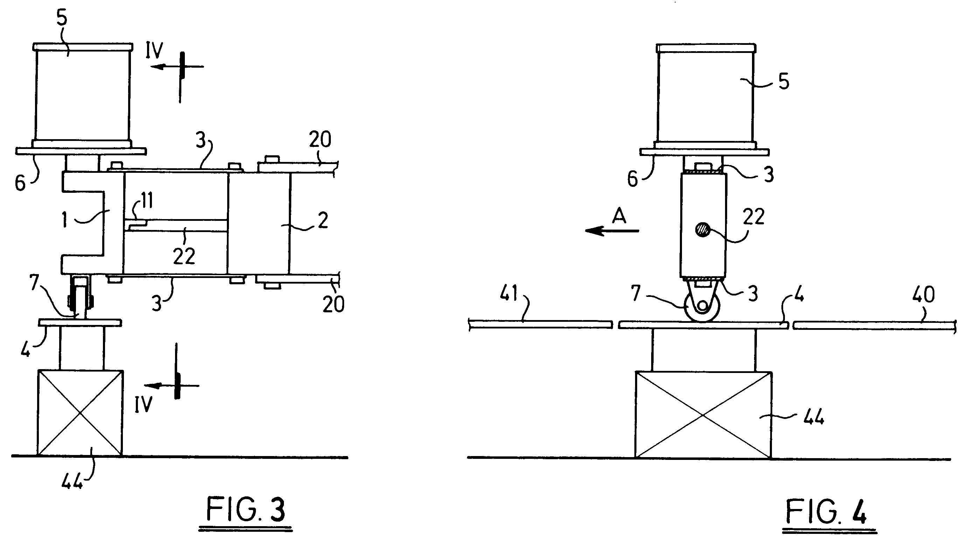

Specifically, as shown in Figures 3 and 4, the invention is intended to be fixed by the body 2 to a drive unit which causes it to move with horizontal motion at uniform speed, so that it appears cyclically in front of a weighing plate 4 of a dynamic weighing balance 44.

This latter is shown schematically, as the invention is suitable for any dynamic weighing balance of known type, with which a plurality of devices according to the invention are to be associated, conveniently equidistantly.

For example, said plurality can be fixed to a horizontal endless chain, to a unit of turntable type or to other equivalent means able to advance the devices with constant speed towards the plate 4. Said advancement means are indicated schematically by 20 in Figure 3.

Suitable loading and discharge means for the objects to be weighed, these latter being indicated by 5 in Figures 3 and 4, are provided upstream and downstream of the plate 4 respectively.

As shown in Figures 3 and 4, the support for the objects to be weighed is in the form of an interchangeable plate 6 placed on the intermediate support 1 provided lowerly that is, on its lower face with an idle wheel 7 having its axis horizontal and transverse to the direction of advancement A (Figure 4) of the objects 5, although there is no reason why the wheel cannot be replaced by a hemispherical head or a ball mounted idly at the base of the body 1, or by a slide shoe.

In Figure 4 it can also be seen that on one side and the other of the weighing plate 4, two fixed surfaces 40 and 41 are provided for the support and sliding of the wheel 7 in its arrival on and departure from the plate 4 respectively.

According to the invention said two surfaces 40 and 41 can be omitted, the supporting of the intermediate support 1 before and after traversing the plate 4 being achieved by two aligned bars 11 and 22 respectively, which are fixed to the intermediate support 1 and to the body 2.

The facing ends of said two bars comprise conjugate mutual bearing seats to maintain the lower generator of the wheel 7 at a level slightly below that occupied by the upper face of the plate 4, indicated by the dashed and dotted line in Figure 1.

In this manner the intermediate support 1 with the respective object 5 to be weighed lying on it is supported by the two bars 11 and 22 until it reaches the plate 4, where the weight of said elements 1 and 5 is then supported by this latter for weighing purposes.

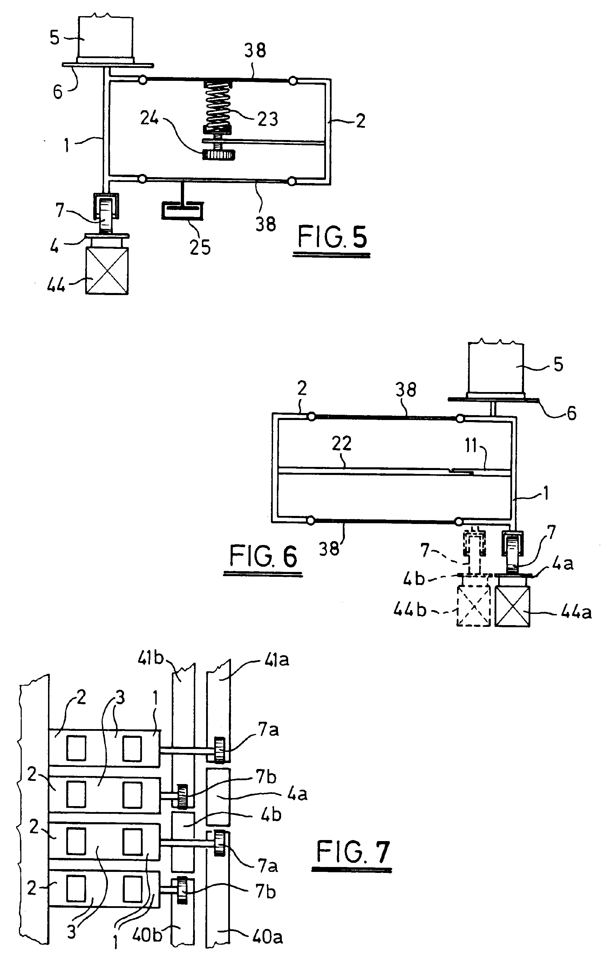

Figure 5 shows schematically an articulated quadrilateral arrangement with rigid link rods 38, in which the deformations of the quadrilateral are opposed by a counteracting spring 23 which can be set by the screw 24, and are stabilized by a damper 25.

The spring 23 acts as a legal counterweight and enables a balance of smaller capacity and hence greater sensitivity and definition to be used without in any way prejudicing response.

A counterweight in the form of a suitably positioned defined weight could be used in place of the spring.

It is apparent that the calibration of the balance 44 presents no problem, it being effected for example by running the wheel 7 along the plate 4 without any object resting on the intermediate support 1.

Figures 6 and 7 show schematically a dynamic weighing line with the adjacent loading devices having their slide wheels 7 offset, these being indicated by 7a and 7b, and arranged to slide on parallel guides 40, indicated by 40a, 41a and 40b, 41b, to cooperate with offset weighing plates 4a and 4b respectively.

It is apparent that the number of guides 40 and respective plates 4 can be greater than two, as can the number of transit positions for the wheels of the loading devices, so equivalently increasing the operating capacity of the line.

In place of the strips 3, two overlying pairs of identical link rods 33 can be provided, such as those of Figure 6, having their axes perpendicular to that of the wheel 7.

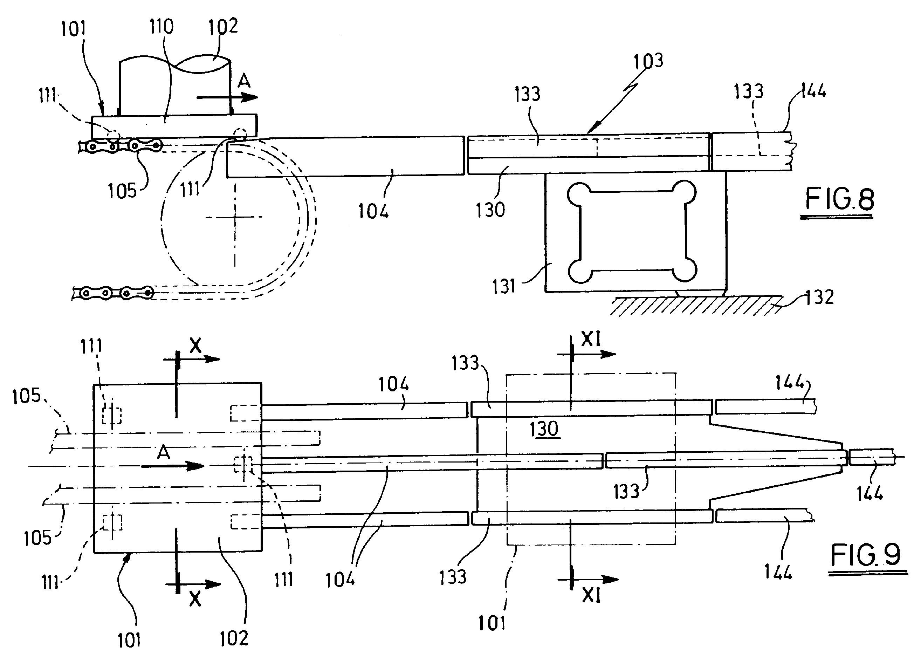

Figures 8 and 9 show an intermediate support 101 in the form of a carriage (or slider) for supporting an object 102 to be weighed, and a slide runway for said carriage indicated overall by 103.

The intermediate support 101 comprises a platform 110 provided lowerly with three identical wheels 111 with their axes transverse to the direction of advancement A of the carriage.

It should be noted that the wheels 111 can be replaced by bearing members such as three shoes with a hemispherical bearing head, or equivalent devices.

As can be seen in Figure 9, said three wheels 111 are arranged in a triangular configuration, with one pair of wheels (the rear wheels) coaxial, whereas the third more forward wheel has its axis parallel to that of these latter.

The base of said triangle lies substantially transverse to the direction of advancement A.

The slide runway 103 is arranged on a weighing plate 130 which is supported by the load cell 131 rigid with the base 132, said elements being shown schematically as they do not form a characterising part of the invention.

According to the invention, said slide runway 103 comprises three rectilinear tracks 133 of the same length (Figure 9) with their distance between centres corresponding to that of the wheels 111.

The three tracks 133 lie in a common horizontal plane (Figures 8, 11).

The two lateral tracks of said three are exactly in line, whereas the central track is displaced downstream from the preceding by a distance equal to the distance between the axes of the rear wheels and front wheel.

The upstream and downstream ends of the three tracks 133 are arranged substantially in the same position as the vertices of said triangle of wheels (Figure 9).

It should be noted that the tracks 133 have a length such as to enable the balance 132 (based on the speed of transit of the carriage 101) to read the weight of the object 102 after the balance has reached an equilibrium state.

It should be noted that there is nothing to prevent the intermediate support 101 being advanced with its pair of coaxial wheels at the front, the three tracks 133 being correspondingly rotated through 180° from the position shown.

An arrival runway 104 and a departure runway 144 are provided respectively upstream and downstream of the runway 103, for loading and discharging the intermediate support 101 onto and from this latter.

Said arrival and departure runways 104 and 144 are exactly aligned and coplanar with the slide runway 103, and are fixed to a convenient support structure (not shown).

Said arrival runway 104 and departure runway 144 are formed exactly as the slide runway 103, for example they consist of three bars of hard material such as surface-hardened and lapped hard steel (Figure 11). The runway 104 can conveniently comprise a descending portion for launching the intermediate support by gravity.

According to the invention, in both the illustrated embodiments the intermediate support 101 is made to freely transit on the runway 103, so that the load cell 131 is not disturbed by factors extraneous to the force-weight of the object 102 to be weighed.

In this respect the intermediate support 101 represents a tare weight which can be memorized for use in the weighing system calculation process.

In the embodiment shown in Figures 8 to 11, the intermediate support 101 is urged forwards by a propelling device 105, for example a pair of V-belts, a pair of chains, a pair of flat belts, a band or a pusher.

Although not shown, it is apparent that upstream of said propelling device 105 there is an arrival line for the intermediate supports carrying the objects 102 to be weighed, where they are collected by the propelling device 105 to be fed towards the runway 104 at a predetermined speed and rate.

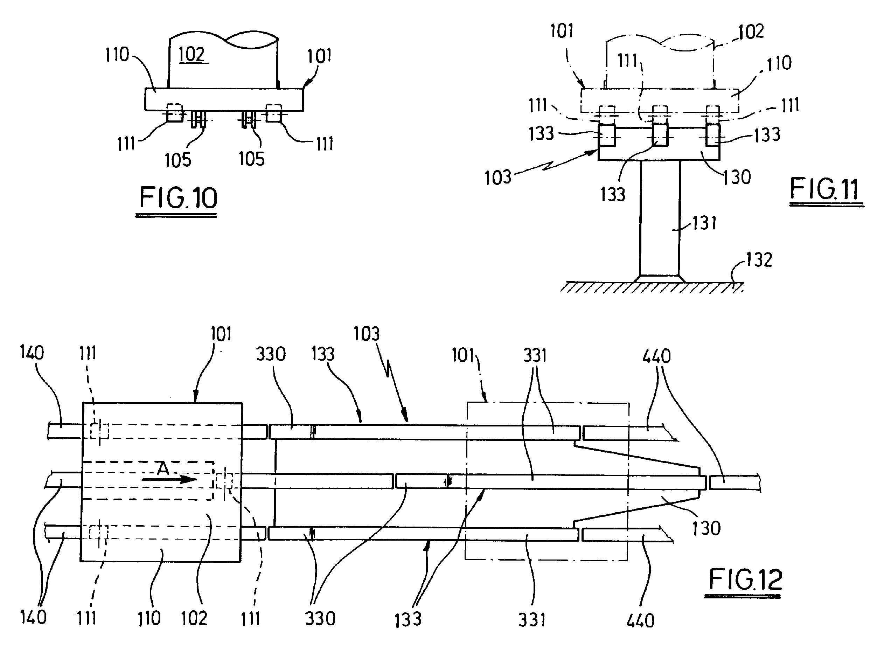

It should be noted that in the illustrated example the propelling device 105 supports the intermediate support 101 by its platform 110 (Figure 10), however there is nothing to prevent the intermediate support being supported by making it slide on suitable tracks associated with the propelling device 105.

The rise/descent of the carriage 101 onto and from the slide runway 103 are virtually instantaneous, because of the configuration of the carriage 101 and of the slide runway 103, and because of the virtually point contact of the wheels 111.

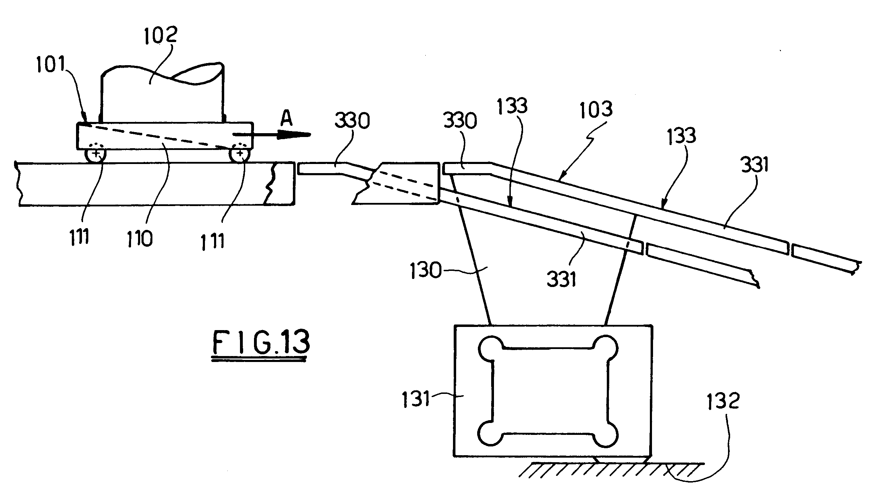

The embodiment shown in Figures 12 and 13 differs from the preceding by the particular lateral profile of the slide runway 103.

From said figures it can be seen that the upstream and downstream ends of the three tracks 133 are offset in the direction of advancement A as in the preceding case, each comprising a horizontal initial portion 330 and a downwardly inclined terminal portion 331, of which the former is aligned with an arrival (or loading) runway 140 and the latter is aligned with a departure (or discharge) runway 440.

The inclined portion 331 of the central track is displaced in a horizontal direction downstream relative to the inclined portions 331 of the lateral tracks by a distance equal to the distance between the upstream ends of said central and lateral tracks.

Substantially, these latter lie in two parallel inclined planes spaced apart by the aforedefined distance (Figure 13).

This enables the carriage 101 to remain perfectly horizontal during descent, this being particularly important if particularly unstable objects and/or receptacles containing liquids are handled, the choice of the most convenient inclination being made on the basis of the characteristic parameters concerned.

It is apparent that in the case of very stable products or objects, such as plate-shaped bodies, the three tracks 133 can be arranged in the same inclined plane, with the carriage 101 then descending in an inclined state.

In all cases, what is important is that the downstream ends of the tracks 133 do not include changes of direction in the vertical plane as this would falsify the reading.

Said second embodiment has the further advantage over the former of not requiring special means for advancing the carriage along the slide tracks 133, such means possibly constituting an undesirable disturbance factor.

## Claims

1. A loading device for dynamic weighing machines comprising a weighing plate (4; 130) along which the objects (5; 102) to be weighed are made to transit at constant speed, characterised by comprising an intermediate support (1; 101) having a lower face with a degree of freedom in the vertical direction, for supporting the object to be weighed, and provided on the lower face with at least one means (7; 111) for rollably or slidably bearing on the weighing plate (4; 130) with linear or point contact.

2. A device as claimed in claim 1, characterised in that said intermediate support is connected to a dragging body (2) by deformable means which respect its degree of freedom in the vertical direction.

3. A device as claimed in claim 1, characterised in that the connection between said intermediate support (1) and body (2) is made by two identical substantially horizontal overlying parallel strips (3) each comprising a pair of identical apertures (33) which define regions of greater flexibility acting as hinges.

4. A device as claimed in claim 1, characterised in that the connection between said intermediate support (1) and body (2) is made by two superposed pairs of identical link rods.

5. A device as claimed in claim 1, characterised in that said slidable bearing means (7; 111) consists of a slide shoe with a rounded bearing head.

6. A device as claimed in claim 1, characterised in that said slidable bearing means (7; 111) is a wheel.

7. A device as claimed in claim 1, characterised in that said slidable bearing means (7; 111) consists of a ball mounted idly at the base of the intermediate support (1).

8. A device as claimed in the preceding claims, characterised in that between said intermediate support (1) and body (2) there are provided means (11, 22) which, when the intermediate support (1) is outside the weighing plate (4), support said intermediate support and its relative object (5) in such a manner that the lower generator of said slidable bearing means is slightly below the weighing plate.

9. A device as claimed in claim 1, characterised in that a presettable spring (23, 24) is provided between the sides of the articulated quadrilateral (1, 38, 38, 2) to counteract its deformations.

10. A device as claimed in claim 1, characterised in that three slidable bearing means (111) are arranged in a triangular configuration with one vertex facing the direction of movement (A) of the slider, they resting on a runway (103) comprising three support tracks (133) which are of the same length but are mutually offset in said direction of movement (A) such that their upstream and downstream ends are arranged in the same triangular configuration as the bearing means (111) of the intermediate support (101).

11. A device as claimed in claim 10, characterised in that said three support tracks (133) are rectilinear and lie in the same horizontal plane.

12. A device as claimed in claim 10, characterised in that said three support tracks (133) are rectilinear and lie in the same plane, this being inclined downwardly to the horizontal in the downstream direction.

13. A device as claimed in claim 10, characterised in that the central track of said three tracks (133) lies in a descending inclined plane whereas the two lateral tracks of said three lie in an inclined plane which is parallel to the preceding but is displaced upstream of this latter by a distance, in the horizontal direction, equal to the distance between the free upstream ends of said central track and lateral tracks.

14. A device as claimed in claim 10, characterised in that said three tracks (133) each comprise a horizontal straight portion (330) upstream and a descendingly inclined straight portion (331) downstream.

15. A device as claimed in claim 10, characterised in that at the upstream and downstream ends of said slide runway (103) there are provided respectively an arrival runway (104; 140) and departure runway (144; 440) for the intermediate supports (101).

16. A device as claimed in claim 10, characterised in that upstream of said slide runway (103) there are provided means (105) for imposing on the intermediate support (101) a speed which causes it to travel under its own impetus along the entire slide runway (103).

## Patentansprüche

1. Ladevorrichtung für dynamische Wägemaschinen, umfassend eine Wiegeplatte (4; 130), entlang der die zu wiegenden Gegenstände (5; 102) mit konstanter Geschwindigkeit bewegt werden, gekennzeichnet durch eine Zwischenauflage (1; 101), welche eine untere Fläche aufweist, mit einem Freiheitsgrad in vertikaler Richtung, um den zu wiegenden Gegenstand zu tragen, und die an der unteren Fläche mit wenigstens einer Einrichtung (7; 111) zur rollenden oder gleitenden Lagerung auf der Wiegeplatte (4; 130) mit linearem oder punktförmigem Kontakt versehen ist.

2. Vorrichtung nach Anspruch 1, dadurch gekennzeichnet, daß die Zwischenauflage mit einem Schleppkörper (2) durch eine verformbare Einrichtung in Bezug auf den Freiheitsgrad in vertikaler Richtung verbunden ist.

3. Vorrichtung nach Anspruch 1, dadurch gekennzeichnet, daß die Verbindung zwischen der besagten Zwischenauflage (1) und dem Körper (2) aus zwei identischen, im wesentlichen horizontal übereinanderliegenden parallelen Bändern (3) hergestellt ist, welche jeweils ein Paar identischer Öffnungen (33) umfassen, welche Bereiche größerer Flexibilität definieren, die als Drehgelenke wirken.

4. Vorrichtung nach Anspruch 1, dadurch gekennzeichnet, daß die Verbindung zwischen der Zwischenauflage (1) und dem Körper (2) aus zwei übereinander angeordneten Paaren von identischen Verbindungsstangen hergestellt ist.

5. Vorrichtung nach Anspruch 1, dadurch gekennzeichnet, daß das besagte Gleitlager (7; 111) aus einem Gleitschuh mit gerundetem Lagerkopf besteht.

6. Vorrichtung nach Anspruch 1, dadurch gekennzeichnet, daß das Gleitlager (7; 111) ein Rad ist.

7. Vorrichtung nach Anspruch 1, dadurch gekennzeichnet, daß das besagte Gleitlager (7; 111) aus einer Kugel besteht, welche lose an der Basis der Zwischenauflage (1) angeordnet ist.

8. Vorrichtung nach einem der vorstehenden Ansprüche, dadurch gekennzeichnet, daß zwischen der Zwischenauflage (1) und dem Körper (2) eine Einrichtung (11, 22) vorgesehen ist, welche, wenn die Zwischenauflage (1) außerhalb der Wiegeplatte (4) ist, die Zwischenauflage und deren jeweiligen Gegenstand (5) in einer solchen Weise trägt, daß die untere Erzeugende des besagten Gleitlagers etwas unterhalb der Wiegeplatte liegt.

9. Vorrichtung nach Anspruch 1, dadurch gekennzeichnet, daß eine voreinstellbare Feder (23, 24) zwischen den Seiten des Gelenkvierecks (1, 38, 38, 2) vorgesehen ist, um dessen Verformungen entgegenzuwirken.

10. Vorrichtung nach Anspruch 1, dadurch gekennzeichnet, daß drei Gleitlager (111) in einer dreieckförmigen Konfiguration angeordnet sind, wobei eine Spitze der Bewegungsrichtung (A) des Gleitstücks gegenüberliegt, wobei sie auf einer Laufbahn (103) ruhen, welche drei Tragschienen (133) umfaßt, die die gleiche Länge aufweisen, aber gegeneinander in Bewegungsrichtung (A) derart versetzt sind, daß ihre in Bewegungsrichtung vorderen und hinteren Enden in der gleichen dreieckförmigen Konfiguration wie das Lager (111) der Zwischenauflage (101) angeordnet sind.

11. Vorrichtung nach Anspruch 10, dadurch gekennzeichnet, daß die besagten drei Tragschienen (133) geradlinig sind und in der gleichen horizontalen Ebene liegen.

12. Vorrichtung nach Anspruch 10, dadurch gekennzeichnet, daß die besagten drei Tragschienen (133) geradlinig sind und in der gleichen Ebene liegen, welche gegenüber der Horizontalen in der Richtung nach hinten nach unten geneigt ist.

13. Vorrichtung nach Anspruch 10, dadurch gekennzeichnet, daß die mittlere Schiene der besagten drei Schienen (133) in einer abschüssig geneigten Ebene liegt, während die beiden seitlichen Schienen der besagten drei in einer geneigten Ebene liegen, welche parallel zu der vorherigen ist, jedoch in Vorwärtsrichtung der letzteren um einen Abstand in horizontaler Richtung versetzt ist, welcher dem Abstand zwischen den freien vorderen Enden der besagten mittleren Schiene und der seitlichen Schienen entspricht.

14. Vorrichtung nach Anspruch 10, dadurch gekennzeichnet, daß die besagten drei Schienen (133) jeweils einen horizontalen geraden Abschnitt (330) nach vorne und einen abschüssig geneigten geraden Abschnitt (331) nach hinten umfassen.

15. Vorrichtung nach Anspruch 10, dadurch gekennzeichnet, daß die vorderen und hinteren Enden der besagten Gleitbahn (103) jeweils mit einer Ankunftslaufbahn (104; 140) und einer Abfahrtslaufbahn (144; 440) für die Zwischenauflagen (101) versehen sind.

16. Vorrichtung nach Anspruch 10, dadurch gekennzeichnet, daß vor der besagten Gleitbahn (103) eine Einrichtung (105) vorgesehen ist, um der Zwischenauflage (101) eine Geschwindigkeit zu verleihen, welche bewirkt, daß sie mit ihrem eigenen Impuls sich entlang der gesamten Gleitbahn (103) fortbewegt.

## Revendications

1. Un dispositif de charge de machines de pesage dynamique comprenant une plaque de pesage (4 ; 130) le long de laquelle les objets (5 ; 102) à peser sont dirigés pour transiter à vitesse constante, caractérisé en ce qu'il comprend un support intermédiaire (1 ; 101) ayant une face inférieure avec un degré de liberté suivant la direction verticale pour supporter l'objet à peser, et sur la face inférieure muni d'au moins un moyen (7 ; 111) pour porter à rotation ou à coulissement sur la plaque de pesage (4 ; 130) avec un contact linéaire ou ponctuel.

2. Un dispositif comme revendiqué dans la revendication 1, caractérisé en ce que ledit support intermédiaire est relié à un corps d'attelage (2) par des moyens déformables qui respectent son degré de liberté suivant la direction verticale.

3. Un dispositif comme revendiqué dans la revendication 1, caractérisé en ce que la liaison entre ledit support intermédiaire (1) et le corps (2) est réalisée par deux bandes parallèles de recouvrement sensiblement horizontales et identiques (3) comprenant chacune une paire d'orifices identiques (33) qui définissent des zones de plus grande flexibilité agissant comme des charnières.

4. Un dispositif comme revendiqué dans la revendication 1, caractérisé en ce que la liaison entre lesdits support intermédiaire (1) et corps (2) est réalisée par deux paires superposées de tiges de liaison identiques.

5. Un dispositif comme revendiqué dans la revendication 1, caractérisé en ce que ledit moyen porteur à coulissement (7 ; 111) consiste en un patin avec une tête porteuse arrondie.

6. Un dispositif comme revendiqué dans la revendication 1, caractérisé en ce que ledit moyen porteur à coulissement (7 ; 111) est une roue.

7. Un dispositif comme revendiqué dans la revendication 1, caractérisé en ce que ledit moyen porteur à coulissement (7 ; 111) consiste en une boule montée librement à la base du support intermédiaire (1).

8. Un dispositif comme revendiqué dans les revendications précédentes, caractérisé en ce qu'entre lesdits support intermédiaire (1) et corps (2) sont prévus des moyens (11, 22) qui, lorsque le support intermédiaire (1) est à l'extérieur de la plaque de pesage (4), supportent ledit support intermédiaire et son objet relatif (5) d'une manière telle que le générateur inférieur dudit moyen porteur à coulissement soit sensiblement au-dessous de la plaque de pesage.

9. Un dispositif comme revendiqué dans la revendication 1, caractérisé en ce qu'un ressort préréglable (23, 24) est prévu entre les côtés du quadrilatère articulé (1, 38, 38, 2) pour agir à l'encontre de ses déformations.

10. Un dispositif comme revendiqué dans la revendication 1, caractérisé en ce que trois moyens porteurs à coulissement (111) sont disposés suivant une configuration triangulaire avec un sommet face à la direction de déplacement (A) du coulisseau, celui-ci reposant sur une voie (103) comprenant trois pistes-supports (133) qui sont de même longueur mais sont mutuellement décalées suivant ladite direction de déplacement (A) de sorte que leurs extrémités aval et amont soient disposées suivant la même configuration triangulaire que les moyens porteurs (111) du support intermédiaire (101).

11. Un dispositif comme revendiqué dans la revendication 10, caractérisé en ce que lesdites trois pistes-supports (133) sont rectilignes et reposent dans le même plan horizontal.

12. Un dispositif comme revendiqué dans la revendication 10, caractérisé en ce que lesdites trois pistes-supports (133) sont rectilignes et reposent dans le même plan, celui-ci étant incliné vers le bas vers l'horizontale suivant la direction aval (13).

13. Un dispositif comme revendiqué dans la revendication 10, caractérisé en ce que la piste centrale desdites trois pistes (133) repose dans un plan incliné descendant tandis que les deux pistes latérales desdites trois pistes reposent dans un plan incliné qui est parallèle au précédent mais est décalé en amont de ces derniers d'une distance, suivant la direction horizontale, égale à la distance entre les extrémités amont libres desdites piste centrale et pistes latérales.

14. Un dispositif comme revendiqué dans la revendication 10, caractérisé en ce que lesdites trois pistes (133) comprennent chacune une portion droite horizontale (330) en amont et une portion droite inclinée descendante (331) en aval.

15. Un dispositif comme revendiqué dans la revendication 10, caractérisé en ce qu'aux extrémités amont et aval de ladite voie de coulissement sont prévues respectivement une voie d'arrivée (104 ; 140) et une voie de départ (144 ; 440) pour les supports intermédiaires (101).

16. Un dispositif comme revendiqué dans la revendication 10, caractérisé en ce qu'en amont de ladite voie de coulissement (103) sont prévus des moyens (105) pour imposer au support intermédiaire (101) une vitesse qui le fait déplacer sous sa propre impulsion le long de la voie de coulissement complète (103).
